# EUROPEAN PATENT APPLICATION

(11) **EP 2 002 890 A1**
(43) Date of publication of application: **17.12.2008**
(21) Application number: 07740397.0
(22) Date of filing: 29.03.2007
(51) Int. Cl.: B01J 27/053, B01D 53/94, B01J 37/08, B01J 37/16, F01N 3/10

(54) **CATALYST FOR EXHAUST GAS PURIFICATION AND PROCESS FOR PRODUCING THE SAME**

(30) Priority: 30.03.2006 JP 2006092721
(71) Applicant: Toyota Jidosha Kabushiki Kaisha, Toyota-shi, Aichi 471-8571 (JP)
(72) Inventor: ISHII, Masaru, Aichi 471-8571 (JP)
(74) Representative: Kuhnen & Wacker
(86) International application number: PCT/JP2007/056959
(87) International publication number: WO 2007/114294

(57) **Abstract**

A catalyst 1 for exhaust gas treatment is processed by depositing noble metal particles 30 on an oxygen storage/release material 20 and by coating a coating layer 40 on the material 20, the coating layer 40 comprising a sulfate compound of the metallic element contained in the material 20. In the catalyst 1, the material 20 can prevent from being reacted with sulfur contents contained in the exhaust gas for forming a new sulfate compound on the surface. Moreover, the temporarily-concentration increasing of the hydrogen sulfide in the exhaust gas can be prevented, which is caused by the sulfur contents adsorbed on the material from the exhaust gas.

## Description

### Technical Field

The present invention relates to catalysts for exhaust gas treatment and processes for producing the same.

### Background Art

In the conventional method for treating exhaust gases from vehicles, it is well known to utilize a three-way catalyst.

The three-way catalyst treats the exhaust gas by oxidation of carbon monoxide (CO) and unburned hydrocarbons (HC) to carbon dioxide and water (vapor), and by reduction of nitrogen oxides (NOₓ) to nitrogen (N₂).

The three-way catalyst is generally composed of three elements: (1) a catalyst, (2) a carrier and (3) a co-catalyst. For example, JPA-2001-113171 and JPA-2002-263493 disclose such three-way catalysts.
(1) The catalyst promotes both the oxidation of carbon monoxide (CO) and unburned hydrocarbons (HC) and the reduction of nitrogen oxides (NOₓ), and is not consumed in the reaction. The catalyst comprises a noble metal, such as platinum (Pt), rhodium (Rh) or the like. In general, the larger the surface area of the catalyst become, the more it promotes the reactions, so the noble metal is formed in the fme particles.

(2) The carrier supports the noble metal particles as the catalyst, in which those particles are dispersed so as not to contact each other. The carrier generally comprises alumina (Al₂O₃) or the like, of which the surface area is large and the heat-resistance is high.

(3) The co-catalyst improves the heat stability of the carrier. When the carrier is under high temperature (when the carrier is exposed to a high-temperature exhaust gas, for example, when the vehicle drives at high speed or is accelerated), the co-catalyst prevents the carrier from lowering the surface area caused by sintering the composition of the carrier (the phase transformation) and, furthermore, the co-catalyst prevents the catalyst from lowering the catalytic activity caused by the accretion (the growth) of the particles supported on the surface. The co-catalyst comprises cerium oxide, zirconium oxide or the like.

Here, the three-way catalyst treats the exhaust gas most efficiently under the approximately ideal air/fuel ratio. The composition of the co-catalyst, such as the cerium oxide or zirconium oxide, has oxygen storage capacity (OSC, or oxygen storage/release capacity), and keeps the atmospheric condition around the catalyst under the approximately ideal air/fuel ratio.
A material having the oxygen storage/release capacity (oxygen storage/release material) stores oxygen when a system is said to be running lean, and releases oxygen when the system is said to be running rich. Thus, the oxygen storage/release material suppresses the variation in oxygen concentration in the proximity of the catalyst composed of the noble metal particles.

### Disclosure of Invention

### Problems to Be Solved By the Invention

However, the conventional three-way catalysts have the problems described below.

A fuel (fossil fuel) of an internal-combustion engine slightly includes sulfur contents, which cause the generation of sulfur dioxide when the fuel is combusted. Then, the sulfur dioxide (SO₂) is contained in the exhaust gas, and reacts with the co-catalyst, which is composed of the cerium oxide or zirconium oxide, for generating sulfate compound (e.g., Ce₂(SO₄)₃) that will be adsorbed on the surface of the co-catalyst.
Under the high-temperature exhaust gas and the fuel-rich atmosphere (for example, when the vehicle is climbing or is accelerated), the sulfate compound reacts with hydrogen (H₂) contained in the exhaust gas to generate hydrogen sulfide (H₂S), which has foul odor.
Unfortunately, the concentration of hydrogen sulfide is temporarily raised in the exhaust gas; as a result, the foul odor is generated.

The objective of the present invention is to provide the catalyst for treating exhaust gas and the process of producing the same enabled to prevent the concentration of hydrogen sulfide in the exhaust gas from temporarily increasing due to the sulfate compound adsorbed on the surface of the oxygen storage/release material.

### Means of Solving the Problems

In accordance with the first aspect of the present invention, the catalyst comprises an oxygen storage/release material, supporting a noble metal thereon, in which the oxygen storage/release material is coated by a sulfate compound.

Preferably, the sulfate compound comprises a metallic element contained in the oxygen storage/release material.

Preferably, the oxygen storage/release material is composed of a ceria or a solid solution of ceria mixed with at least one selected from the group consisting of: zirconia, titania, and alumina.

Preferably, the atomic concentration of sulfur element in the surface of the sulfate compound is set between 1.5 atomic% to 10.0 atomic%.

In accordance with the second aspect of the present invention, the process for producing a catalyst for exhaust gas treatment comprises a deposition step for depositing a noble metal on an oxygen storage/release material which has an oxygen storage/release capacity and a coating step for coating a sulfate compound on a surface of the oxygen storage/release material.

Preferably, the sulfate compound comprises a metallic element contained in the oxygen storage/release material.

Preferably, the oxygen storage/release material is composed of a ceria or a solid solution of ceria mixed with at least one selected from the group consisting of: zirconia, titania, and alumina.

Preferably, the atomic concentration of sulfur element in the surface of the sulfate compound is set between 1.5 atomic% to 10.0 atomic%.

Advantageously, in the deposition step, the oxygen storage/release material is contacted to an aqueous solution of noble metal salts and then the oxygen storage/release material is baked for a certain time at a certain temperature.

Advantageously, in the coating step, the oxygen storage/release material is contacted to a sulfuric acid solution with a predetermined concentration and then the oxygen storage/release material is baked for a certain time at a certain temperature.

Preferably, the oxygen storage/release material is baked in an atmosphere for a certain time at a certain temperature and thereafter baked in a reducing atmosphere for a certain time at a certain temperature.

### Effect of the Invention

The catalyst according to the present invention can prevent from increasing the concentration of the hydrogen sulfide in the exhaust gas.
Furthermore, the catalyst produced by utilizing the process for producing the catalyst according to the present invention can prevent from increasing the concentration of the hydrogen sulfide in the exhaust gas.

### Brief Description of Drawings

FIG. 1 is an enlarged section illustrating a catalyst according to the present invention.
FIG. 2 is a flow chart showing a process for producing the catalyst.
FIG. 3 is a graph showing heat pattern examples at a time of heating the catalyst in the test for the concentration of hydrogen sulfide.
FIG 4 is a graph showing the relationship between the atomic concentration of sulfur in the coating layer and the concentration of hydrogen sulfide in the exhaust gas.

### Explanation of Numerals

- 1: catalyst
- 20: oxygen storage/release material
- 30: noble metal particle (noble metal)
- 40: coating layer (sulfate compound)

### The Best Mode for Carrying Out the Invention

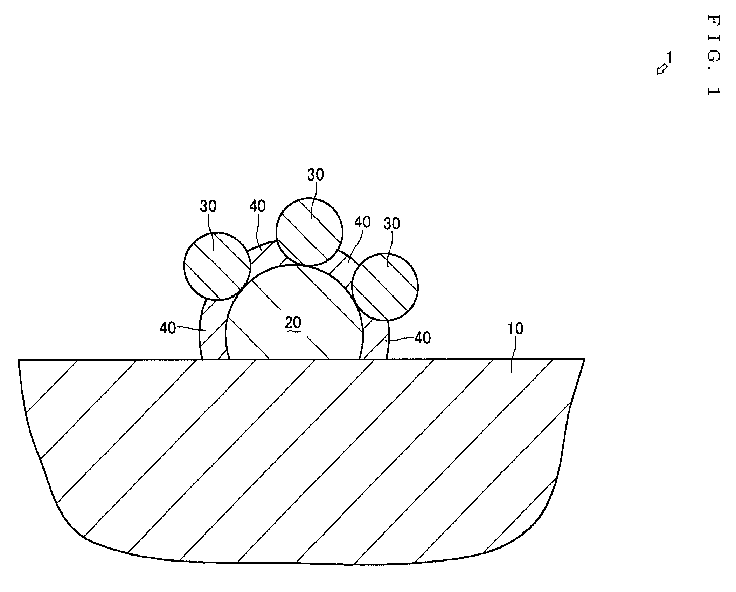

Referring FIG. 1, a catalyst 1 for treating an exhaust gas is described below, which is one embodiment of carrying out a catalyst for exhaust gas treatment in accordance with the present invention.

The catalyst 1 treats the exhaust gas, and mainly comprises a carrier 10, an oxygen storage/release material 20, noble metal particles 30 and a coating layer 40.
Here, "Exhaust Gas" means the gas stream generated by combusting the fuel, such as gasoline or diesel fuel, in the internal-combustion engine.

On the carrier 10, the oxygen storage/release material 20, the noble metal particles 30 and the coating layer 40 are deposited.
The carrier 10 is composed of alumina (Al₂O₃), of which the surface area is large and the heat-resistance is high.
Alternatively, such a carrier 10 is composed of an alumina-coated material (e.g., a ceramic).

The oxygen storage/release material 20 is composed of cerium dioxide (CeO₂), which has the oxygen storage/release capacity. The oxygen storage/release material 20 is deposited on the surface of the carrier 10.
Alternatively, such an oxygen storage/release material 20 is composed of a solid solution (or mixture) of ceria (cerium dioxide) mixed with at least one selected from the group consisting of: zirconia (ZrO₂), titania (TiO₂) and alumina (Al₂O₃).

The noble metal particles 30 are composed of a particulate of platinum (Pt), and are deposited on the surface of the oxygen storage/release material 20. The noble metal particle 30 promotes the oxidation of carbon monoxide and hydrocarbons and the reduction of nitrogen oxides.
Alternatively, such a noble metal according to the present invention is selected from the group consisting of platinum, rhodium (Rh) and palladium (Pd). Moreover, such the noble metal is the mixture composed of two or more of these noble metals.

The coating layer 40 is composed of cerium sulfate (Ce₂(SO₄)₃), which is one of the sulfate compounds of a metallic element contained in the oxygen storage/release material 20. The coating layer 40 coats the surface of the oxygen storage/release material 20, more particularly, the exposure portion of that.
Here, "Exposure Portion" means the portion of the surface of the oxygen storage/release material 20 where the noble metals are not deposited. If the oxygen storage/release material is deposited on the carrier, "Exposure Portion" means the portion of the surface of the oxygen storage/release material 20 where the noble metals or the carrier does not contact.

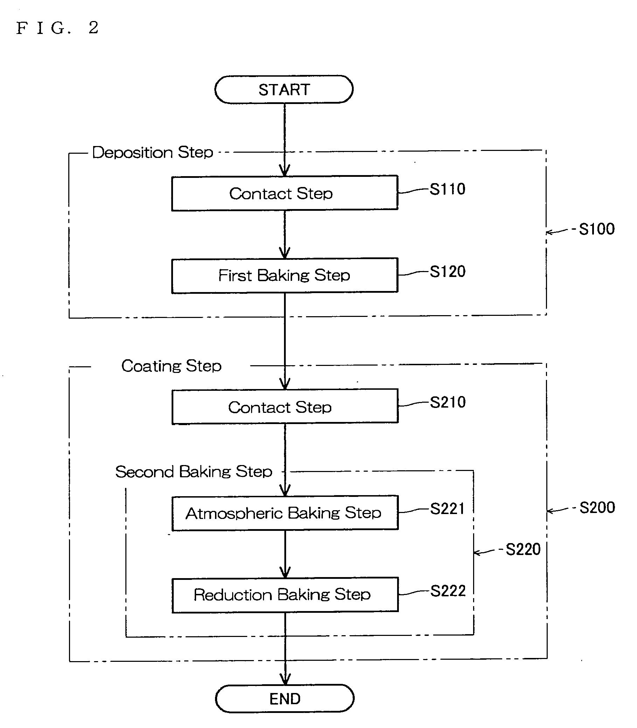

A process for producing the catalyst 1 will be described below referring FIG. 2.

As shown in FIG. 2, the process comprises a noble metal deposition step S100 and a sulfate-compound coating step S200.

The deposition step S100 will be described below.
In the deposition step S100, the noble metal particles 30 are deposited on the surface of the oxygen storage/release material 20. The deposition step S100 comprises a contact step S 110 and a first baking step S120.

In the contact step S110, the oxygen storage/release material 20 is contacted to an aqueous solution of noble-metal salts.
In this embodiment, a nitric acid solution of dinitroammine platinum containing 2.0 g of platinum is introduced into 1000 cc of ion-exchanged water for formation of the aqueous solution of noble-metal salts. In the aqueous solution of noble metal-salts, 40 g of cerium dioxide powder (which is the composition of the oxygen storage/release material 20) is immersed, and they are mixed for 2 hours for contacting the oxygen storage/release material 20 to the aqueous solution of noble-metal salts.
After taking out the cerium dioxide powder from the aqueous solution of noble-metal salts, the cerium dioxide powder is kept inside the drying furnace (not shown) for 2 hours at 120 degrees C for drying.
It should be noted that other water-soluble noble-metal salts could be used for preparation of such the aqueous solution of noble-metal salts instead of the nitric acid solution of dinitroammine platinum. Moreover, the spraying step could be carried out for spraying the nitric acid solution of dinitroammine platinum to the surface of the cerium dioxide powder, replacing with the above-mentioned contact step in which the immersion is carried out.

The contact step S 110 is followed by the first baking step S120.

In the baking step S120, the oxygen storage/release material 20 is baked for a certain time at a certain temperature.
The oxygen storage/release material 20 is kept inside the baking furnace for 1 hour at 300 degrees C for baking.
After accomplishing the baking, the noble metal particles 30, consisting of fine platinum particles, are deposited on the surface of the oxygen storage/release material 20, in which the particles are dispersed so as not to contact each other.
In the baking step, the atmospheric condition is not particularly determined. However, excessively high-temperature baking causes the particle growth in the noble metal particles 30 deposited on the oxygen storage/release material 20, and low-temperature baking requires the longer time. So, the temperature condition needs to be selected according to the form, amount, particle size or the like of the oxygen storage/release material 20.

When the baking step S 120 is finished, the deposition step S100 is accomplished, followed by the coating step S200.

The coating step S200 will be described below.
In the coating step S200, the coating layer 40 is formed, which coats the exposure portion of the oxygen storage/release material 20. The coating step S200 comprises a contact step S210 and a second baking step S220.

In the contact step S210, the oxygen storage/release material 20, supporting the noble metal particles 30 on the surface thereof in the deposition step S100, is contacted to a sulfuric acid solution with a predetermined concentration. The term "the sulfuric acid solution with the predetermined concentration" will be after-mentioned.
In this embodiment, the oxygen storage/release material 20 (40 g of cerium dioxide powder) supporting the noble metal particles 30 is immersed in the sulfuric acid solution with the predetermined concentration. Then, the supernatant of the sulfuric acid solution is removed, followed by vacuum-drying.

The contact step S210 is followed by the second baking step S220.

In the second baking step S220, the oxygen storage/release material 20, immersed in the sulfuric acid solution in the contact step S210, is baked for a certain time at a certain temperature.
The second baking step S220 comprises an atmospheric baking step S221 and a reduction baking step S222.

In the atmospheric baking step S221, the oxygen storage/release material 20, supporting the noble metal particles 30 and immersed in the sulfuric acid solution, is baked in the atmosphere for a certain time at a certain temperature.
In this embodiment, in the atmospheric baking step S221, the oxygen storage/release material 20 (40 g of cerium dioxide powder), which is immersed in the sulfuric acid solution and on which the noble metal particles 30 are deposited, is kept inside the baking furnace, and is baked in the atmosphere for 1 hour at 700 degrees C. Thus, the layer of cerium sulfate (Ce₂(SO₄)₃), that is the coating layer 40, is deposited on the exposure portion of the oxygen storage/release material 20.
As mentioned above, the sulfate compound (coating layer 40) coats the surface of the oxygen storage/release material 20 on which the noble metal particles 30 are deposited.

In the operating temperature-range of the catalyst 1 (about 400 degrees C), the structure, of the cerium sulfate (Ce₂(SO₄)₃) deposited on the oxygen storage/release material 20, lacks stability. Contacting high-temperature exhaust gas in a reducing atmosphere, the cerium sulfate decomposes and generates hydrogen sulfide.

In the atmospheric baking step S221, the layer of the cerium sulfate (Ce₂(SO₄)₃), that is the coating layer 40, is deposited on the surface of the oxygen storage/release material 20 at the higher temperature (700 degrees C) than the operating temperature-range of the catalyst 1. So, the structure of the cerium sulfate composing the coating layer 40 is stable. Even if the coating layer 40 is exposed to the exhaust gas at the operating temperature-range, the coating layer 40 is prevented from reacting with the sulfur oxides contained in the exhaust gas. Moreover, even if the coating layer 40 is exposed to the high-temperature exhaust gas in the reducing atmosphere, the cerium sulfate, composing the coating layer 40, will be rarely decomposed.
Accordingly, the coating layer 40 coating the oxygen storage/release material 20 suppresses the generation of hydrogen sulfide, contacting the high-temperature exhaust gas in the reducing atmosphere.
It should be noted that the baking temperature in the atmospheric baking step S221 is preferred to be over 600 degrees C, which is enough higher than the operating temperature-range of the catalyst 1. However, the baking temperature should be lower than 700 degrees C, due to causing the particle growth of the noble metal particles 30 deposited on the oxygen storage/release material 20 or due to raising energy cost.

The atmospheric baking step S221 is followed by the reduction baking step S222.

In the reduction baking step S222, the oxygen storage/release material 20, baked in the atmospheric baking step S221, is baked in the reducing atmosphere for a certain time at a certain temperature.
In this embodiment, the oxygen storage/release material 20, supporting the noble metal particles 30 and coated by the coating layer 40, is kept inside the baking furnace in the reducing atmosphere containing hydrogen (H₂) or the like for 1 hour at 700 degrees C.
The noble metal particles 30, which consist of platinum and which are deposited on the surface of the oxygen storage/release material 20 that is baked in the atmospheric baking step S221, are reacted with sulfuric acid at the surface for generating platinum sulfate and the like; as a result, the catalytic activity is lowered.

With respect to the oxygen storage/release material 20, baked in the atmosphere for the certain time at the certain temperature in the atmospheric baking step S221, the platinum sulfate will be reduced after the reduction baking step S222. As a result, the catalytic activity of the noble metal particles 30 is refreshed.

When the reduction baking step S222 is finished, the second baking step S220 is accomplished. When the second baking step S220 is accomplished, the coating step S200 is ended.
Finally, the oxygen storage/release material 20, which supports the noble metal particles 30 thereon and which is coated by the coating layer 40 on the exposure portion, is deposited on the carrier 10, and then the production of the catalyst 1 is completed.

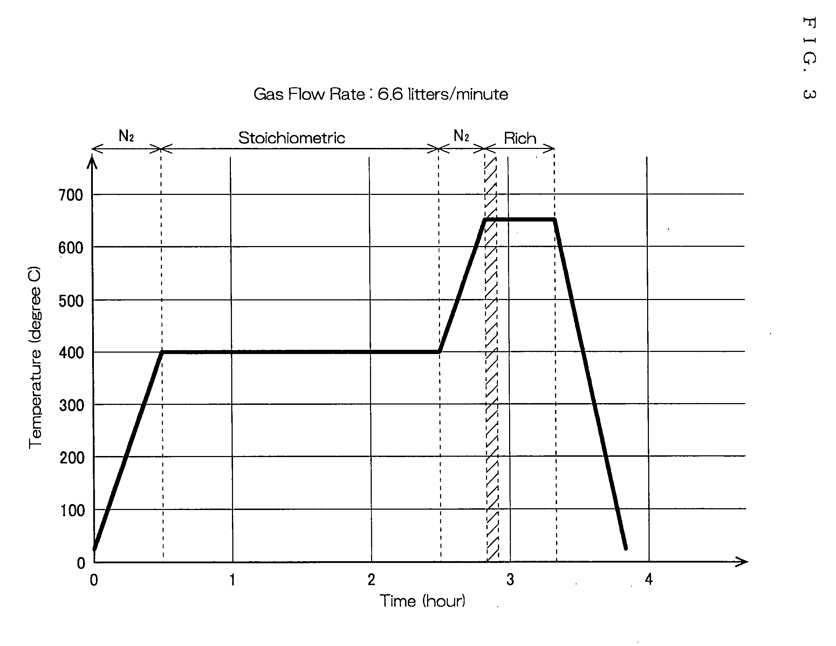

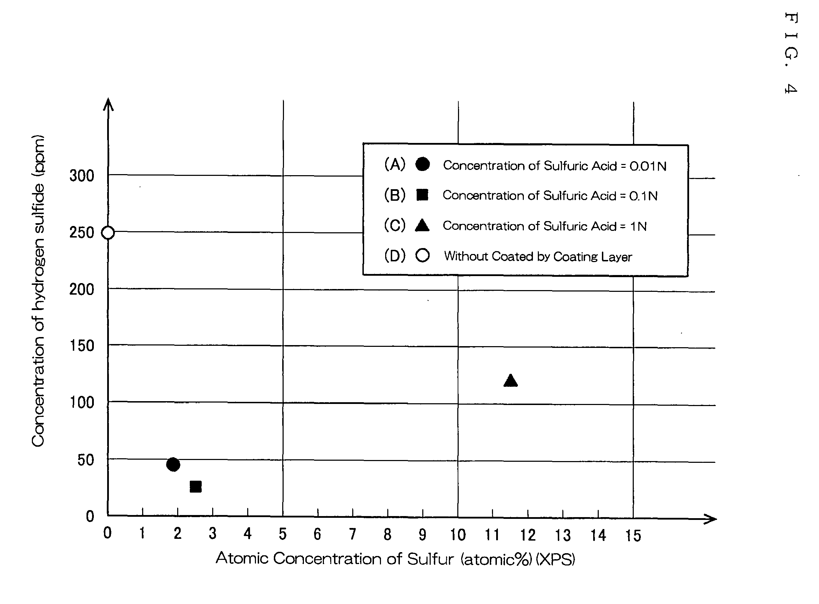

The relationship, between the condition of the coating layer 40 and the concentration of hydrogen disulfide, will be described below referring FIGS. 3 and 4.

In the contact step S210, three sulfuric acid solutions are prepared, of which the concentrations differ from each other: (A) 0.01N, (B) 0.1N and (C) 1N. The cerium dioxide powders are immersed in three sulfuric acid solutions (A), (B), and (C) respectively, and then each of the cerium dioxide powders is followed by the subsequent processes for production of the oxygen storage/release material 20 that supports the noble metal particles 30 and is coated by the coating layer 40, which is distinct from each other.
(D) Another oxygen storage/release material 20 is prepared, where only the deposition step S 100 is processed, so that the coating layer 40 does not coat it.

Preparing the 40 g powders of oxygen storage/release materials 20 made in the ways as above-mentioned (A) to (D) respectively, and then the each powder is mixed with 120 g powder of alumina in 1000 cc of ion-exchanged water.
The powders are dried at 120 degrees C, and then baked for a certain time at 300 degrees C; as a result, four catalysts are produced, in which carrier 10 supports the oxygen storage/release material 20 coated by the different coating layer 40 from each other.
These four catalysts are solidified by utilizing a uniaxial molder, followed by powdered for forming the pellets of which the average size is 1-2 mm. Taking out the 2 g of the catalyst in pellet form, it is filled into a fix-bed flow reactor system.

As shown in FIG. 3, a nitrogen gas, STOICHIOMETRIC GAS, the nitrogen gas, and RICH GAS flow in rotation in the fix-bed flow reactor system.
'STOICHIOMETRIC GAS' simulates the exhaust gas generated by the combustion of the internal-combustion engine in the stoichiometric air/fuel condition. STOICHIOMETRIC GAS consists of: 0.2 % of oxygen (O₂); 0.5 % of carbon oxide (CO); 700 ppm of propene (C₃H₆); 0.28 % of nitric oxide (NO); 30 ppm of hydrogen disulfide (H₂S); 14.5 % of carbon dioxide (CO₂); 3.0 % of water (H₂O); and the rest of nitrogen (N₂).
'RICH GAS' simulates the exhaust gas generated by the combustion of the internal-combustion engine in the rich air/fuel condition. RICH GAS consists of: 700 ppm of propene (C₃H₆); 14.5 % of carbon dioxide (CO₂); 3.0 % of water (H₂O); and the rest of nitrogen (N₂).

The nitrogen gas is flowed for 30 minutes to raise the temperature of the catalysts from room temperature (25 degrees C) to 400 degrees C. STOICHIOMETRIC GAS is flowed for 2 hours keeping the temperature at 400 degrees C. The nitrogen gas is flowed for 20 minutes to raise the temperature to 650 degrees C. RICH GAS is flowed for 2 hours keeping the temperature at 650 degrees C. RICH GAS is stopped, and then the catalysts are cooled to the room temperature. In this test, the gas flow rates are kept constant, 6.6 litters/minute.

During carrying out the heating as shown in FIG. 3, the concentrations of hydrogen sulfide which are contained in the exhaust gas from the fix-bed flow reactor system are measured.

FIG. 4 is a graph showing the relationship between the sulfur concentrations (atomic concentration of sulfur) in the proximity (a couple of nanometers) of the surface of the catalysts measured by utilizing XPS (X-ray Photoelectron Spectroscopy) and the concentrations averaged by 5 minutes (the hatching area of FIG. 3) of hydrogen sulfide contained in the exhaust gas from the fix-bed flow reactor.

As shown in the abscissa axis, the sulfur concentration mirrors the thickness of the coating layer 40, coating the exposure portion of the oxygen storage/release material 20. If the concentration of the sulfuric acid solution is high that contacts the oxygen storage/release material 20, the sulfur concentration becomes high.
Thus, adjusting the concentration of the sulfuric acid solution enables to control the thickness of the coating layer 40.

On the other hand, the concentration of hydrogen sulfide of the catalyst shows about 250 ppm, in which it is prepared with the oxygen storage/release material 20 of (D) without the coating layer 40.
This is why the hydrogen sulfide contained in STOICHIOMETRIC GAS reacts at the surface of the oxygen storage/release material 20 for generating the sulfate compound, and then RICH GAS reduces the sulfate compound to generate a lot of hydrogen sulfide.

The concentration of hydrogen sulfide of catalyst prepared with the oxygen storage/release material 20 of (A) is about 50 ppm. The concentration of hydrogen sulfide of catalyst prepared with the oxygen storage/release material 20 of (B) is about 30 ppm.
This is why the sulfate compound composing the coating layer 40 is stable, and thus another sulfate compound would not be generated even by the contact with STOICHIOMETRIC GAS and the coating layer 40 would not be decomposed to generate hydrogen sulfide by the reducing gas or high-temperature RICH GAS.

The concentration of hydrogen sulfide of catalyst prepared with the oxygen storage/release material 20 of (C) is about 120 ppm.
This is why the sulfate compound composing the coating layer 40 is decomposed for generating hydrogen sulfide in the case the coating layer 40 is thick.
Moreover, the metallic element of the oxygen storage/release material 20 is reacted with the sulfuric acid solution for coating the coating layer 40 on the oxygen storage/release material 20; as a result, as long as the coating layer 40 becomes thicker, the substantial volume of the oxygen storage/release material 20 will become smaller and the oxygen storage/release capacity thereof also will be lowered. Considering this aspect, the thickness of the coating layer 40 is preferably set smaller than a certain value.

As above-mentioned, to lower the concentration of hydrogen sulfide in the exhaust gas, the sulfur concentration (atomic concentration of sulfur) of the coating layer 40 (sulfate compound) measured by XPS is preferably set between 1.5 atomic% and 10 atomic%.

The catalyst 1 in accordance with the present invention comprises the oxygen storage/release material 20 on which the noble metal particles 30 are deposited, in which the oxygen storage/release material 20 is coated by the coating layer 40 composed of sulfate compound.
Due to the catalyst 1 above-mentioned, it can prevent from forming a new sulfate compound on the surface of the oxygen storage/release material 20 caused by the reaction of the sulfur oxide in the exhaust gas with the oxygen storage/release material 20. So, if the catalyst 1 is contacted to the exhaust gas at high-temperature and reducing atmosphere, there rarely generates hydrogen sulfide.
Accordingly, the concentration increasing of the hydrogen sulfide in the exhaust gas can be prevented (temporarily).
Furthermore, the noble metal particles 30 are deposited on the oxygen storage/release material 20, so that the noble metal particles 30 serve as paths for storing/releasing oxygen from/to the exhaust gas to/from the oxygen storage/release material 20. As a result, even if the coating layer 40 coats the exposure portion of the oxygen storage/release material 20, the oxygen storage/release capacity of the oxygen storage/release material 20 can be kept.

The sulfate compound as the coating layer 40 of the catalyst 1 is composed of cerium sulfate (Ce₂(SO₄)₃), which is one of the sulfate compounds of a metallic element contained in the oxygen storage/release material 20.
Due to the catalyst 1 above-mentioned, it can prevent from forming a new sulfate compound on the surface of the oxygen storage/release material 20 caused by the reaction of the sulfur oxide in the exhaust gas with the oxygen storage/release material 20. So, if the catalyst 1 is contacted to the exhaust gas at high-temperature and reducing atmosphere, there rarely generates hydrogen sulfide.
Accordingly, the concentration increasing of the hydrogen sulfide in the exhaust gas can be prevented (temporarily).
Further, the noble metal particles 30 are deposited on the oxygen storage/release material 20, so that the noble metal particles 30 serve as paths for storing/releasing oxygen from/to the exhaust gas to/from the oxygen storage/release material 20. As a result, even if the coating layer 40 coats the exposure portion of the oxygen storage/release material 20, the oxygen storage/release capacity of the oxygen storage/release material 20 can be kept.
Furthermore, the sulfate compound can be easily coated on the surface of the oxygen storage/release material 20 by immersion into the sulfuric acid solution with predetermined concentration.

The oxygen storage/release material 20 is composed of the ceria or the solid solution of ceria mixed with at least one selected from the group consisting of: zirconia, titania, and alumina.
Due to the above-mentioned structure, the oxygen storage/release material 20 can efficiently store/release oxygen in response to the oxygen concentration in the exhaust gas, so that the treatment of exhaust gas (the oxidation of carbon monoxide and unburned hydrocarbons and the reduction of nitrogen oxides) can be efficiently performed.

The atomic concentration of sulfur element in the surface of the sulfate compound composing the coating layer 40 is set between 1.5 atomic% to 10.0 atomic%.
Therefore, the generation of hydrogen sulfide caused by the decomposition of sulfate compound can be prevented.

The baking temperature in the heat processing for the coating layer 40 (in the atmospheric baking step S221) is set in 600 to 700 degrees C.
Therefore, the structure of the sulfate compound composing the coating layer 40 becomes stable, so that the generation of hydrogen sulfide caused by the decomposition of sulfate compound can be prevented even if the catalyst 1 is contacted to the exhaust gas at high-temperature and reducing atmosphere.

The process for producing the catalyst 1 for exhaust gas treatment comprises the deposition step S100 for depositing the noble metal particles 30 on the oxygen storage/release material 20 which has an oxygen storage/release capacity and the coating step S200 for coating the coating layer 40 on a surface of the oxygen storage/release material 20.
Due to the catalyst 1 above-mentioned, it can prevent from forming a new sulfate compound on the surface of the oxygen storage/release material 20 caused by the reaction of the sulfur oxide in the exhaust gas with the oxygen storage/release material 20. So, if the catalyst 1 is contacted to the exhaust gas at high-temperature and reducing atmosphere, there rarely generates hydrogen sulfide.
Accordingly, the concentration increasing of the hydrogen sulfide in the exhaust gas can be prevented (temporarily).
Furthermore, the noble metal particles 30 are deposited on the oxygen storage/release material 20, so that the noble metal particles 30 serve as paths for storing/releasing oxygen from/to the exhaust gas to/from the oxygen storage/release material 20. As a result, even if the coating layer 40 coats the exposure portion of the oxygen storage/release material 20, the oxygen storage/release capacity of the oxygen storage/release material 20 can be kept.

The sulfate compound as the coating layer 40 of the catalyst 1 is composed of cerium sulfate (Ce₂(SO₄)₃), which is one of the sulfate compounds of a metallic element contained in the oxygen storage/release material 20.
Due to the catalyst 1 above-mentioned, it can prevent from forming a new sulfate compound on the surface of the oxygen storage/release material 20 caused by the reaction of the sulfur oxide in the exhaust gas with the oxygen storage/release material 20. So, if the catalyst 1 is contacted to the exhaust gas at high-temperature and reducing atmosphere, there rarely generates hydrogen sulfide.
Accordingly, the concentration increasing of the hydrogen sulfide in the exhaust gas can be prevented (temporarily).
Further, the noble metal particles 30 are deposited on the oxygen storage/release material 20, so that the noble metal particles 30 serve as paths for storing/releasing oxygen from/to the exhaust gas to/from the oxygen storage/release material 20. As a result, even if the coating layer 40 coats the exposure portion of the oxygen storage/release material 20, the oxygen storage/release capacity of the oxygen storage/release material 20 can be kept.
Furthermore, the sulfate compound can be easily coated on the surface of the oxygen storage/release material 20 by immersion into the sulfuric acid solution with predetermined concentration.

The oxygen storage/release material 20 is composed of the ceria or the solid solution of ceria mixed with at least one selected from the group consisting of: zirconia, titania, and alumina.
Due to the above-mentioned structure, the oxygen storage/release material 20 can efficiently store/release oxygen in response to the oxygen concentration in the exhaust gas, so that the treatment of exhaust gas (the oxidation of carbon monoxide and unburned hydrocarbons and the reduction of nitrogen oxides) can be efficiently performed.

The atomic concentration of sulfur element in the surface of the sulfate compound composing the coating layer 40 is set between 1.5 atomic% to 10.0 atomic%.
Therefore, the generation of hydrogen sulfide caused by the decomposition of sulfate compound can be prevented.

The deposition step S100 comprises the contact step S 110 for contacting the oxygen storage/release material 20 to the aqueous solution of noble metal salts (the nitric acid solution of dinitroammine platinum) and the first baking step S120 for baking the oxygen storage/release material 20 for 1 hour at 300 degrees C.
Therefore, the noble metal particles 30 can be easily deposited on the oxygen storage/release material 20 for uniformly dispersed each other.

The coating step S200 comprises the contact step S210 for contacting the oxygen storage/release material 20 to the sulfuric acid solution with the predetermined concentration and the second baking step S220 for baking the oxygen storage/release material 20 for a certain time at a certain temperature.
Therefore, the coating layer 40 can be easily formed on the oxygen storage/release material 20.

The second baking step S220 comprises the atmospheric baking step S221 for baking the oxygen storage/release material 20 in the atmosphere for a certain time at a certain temperature and the reduction baking step S222 for baking the oxygen storage/release material 20 in the reducing atmosphere for a certain time at a certain temperature.
Accordingly, in the process for coating the coating layer 40 on the exposure portion of the surface of the oxygen storage/release material 20, the sulfate of the noble metals formed on the surface of the noble metal particles 30 can be temporarily re-decomposed; as a result, the catalytic activity of the noble metal particles 30 can keep high level.

The baking temperature in the heat processing for the coating layer 40 (in the atmospheric baking step S221) is set in 600 to 700 degrees C.
Therefore, the structure of the sulfate compound composing the coating layer 40 becomes stable, so that the generation of hydrogen sulfide caused by the decomposition of sulfate compound can be prevented even if the catalyst 1 is contacted to the exhaust gas at high-temperature and reducing atmosphere.

### Industrial Applicability

The present invention is suitably applicable to the treatment of exhaust gas streams from the internal-combustion engine.

## Claims

1. A catalyst for exhaust gas treatment, comprising:
an oxygen storage/release material, supporting a noble metal thereon,
wherein the oxygen storage/release material is coated by a sulfate compound.

2. The catalyst according to claim 1,
wherein the sulfate compound comprises a metallic element contained in the oxygen storage/release material.

3. The catalyst according to claim 1 or 2,
wherein the oxygen storage/release material is composed of a ceria or a solid solution of ceria mixed with at least one selected from the group consisting of: zirconia, titania, and alumina.

4. The catalyst according to any one of claims 1 to 3,
wherein an atomic concentration of sulfur element in a surface of the sulfate compound is set between 1.5 atomic% to 10.0 atomic%.

5. A process for producing a catalyst for exhaust gas treatment, comprising:
(a) depositing a noble metal on an oxygen storage/release material which has an oxygen storage/release capacity; and
(b) coating a sulfate compound on a surface of the oxygen storage/release material.

6. The process for producing the catalyst according to claim 5,
wherein the sulfate compound comprises a metallic element contained in the oxygen storage/release material.

7. The process for producing the catalyst according to claim 5 or 6,
wherein the oxygen storage/release material is composed of a ceria or a solid solution of ceria mixed with at least one selected from the group consisting of: zirconia, titania, and alumina.

8. The process for producing the catalyst according to any one of claims 5 to 7,
wherein an atomic concentration of sulfur element in a surface of the sulfate compound is set between 1.5 atomic% to 10.0 atomic%.

9. The process for producing the catalyst according to any one of claims 5 to 8,
wherein in step (a),
the oxygen storage/release material is contacted to an aqueous solution of noble-metal salts and then the oxygen storage/release material is baked for a certain time at a certain temperature.

10. The process for producing the catalyst according to any one of claims 5 to 9,
wherein in step (b),
the oxygen storage/release material is contacted to a sulfuric acid solution with a predetermined concentration and then the oxygen storage/release material is baked for a certain time at a certain temperature.

11. The process for producing the catalyst according to claim 10,
wherein the oxygen storage/release material is baked in an atmosphere for a certain time at a certain temperature and then the oxygen storage/release material is baked in a reducing atmosphere for a certain time at a certain temperature.
